# EUROPEAN PATENT SPECIFICATION

(11) **EP 0 398 495 B1**
(45) Date of publication and mention of the grant of the patent: **22.01.1997**
(21) Application number: 90303885.9
(22) Date of filing: 10.04.1990
(51) Int. Cl.: G06F 9/46

(54) **File lock management in a distributed data processing system**
Dateiverriegelung in einem verteilten Dateisystem
Verrouillage de fichiers dans un système de traitement de données distribué

(30) Priority: 15.05.1989 US 352080
(43) Date of publication of application: 22.11.1990
(73) Proprietor: International Business Machines Corporation, Armonk, N.Y. 10504 (US)
(72) Inventor: Henson, Larry William, Austin, TX 78759 (US); Johnson, Donavon William, Georgetown, TX 78628 (US); Morgan, Stephen Paul, Mahopac, NY 10541 (US); Smith, Todd Allen, Austin, Texas 78746 (US)
(74) Representative: Bailey, Geoffrey Alan

(56) References cited:
- EP-A- 0 278 312
- SOFTWARE ENGINEERING JOURNAL. vol. 3, no. 5, September 1988, LONDON, GB pages 142 - 148; A. MUKHERJEE ET AL.: 'A DISTRIBUTED FILE SERVER FOR EMBEDDED APPLICATIONS '
- IBM TECHNICAL DISCLOSURE BULLETIN. vol. 24, no. 7A, December 1981, NEW YORK, US pages 3137 - 3139; C.T. BAKER JR.: 'DATA CONCURRENCY CONTROL IN DISTRIBUTED DATA NETWORKS '

## Description

This invention relates to file lock management in a distributed data processing system including processing systems connected through a network, and to the accessing of files between local and remote processing systems within the network.

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

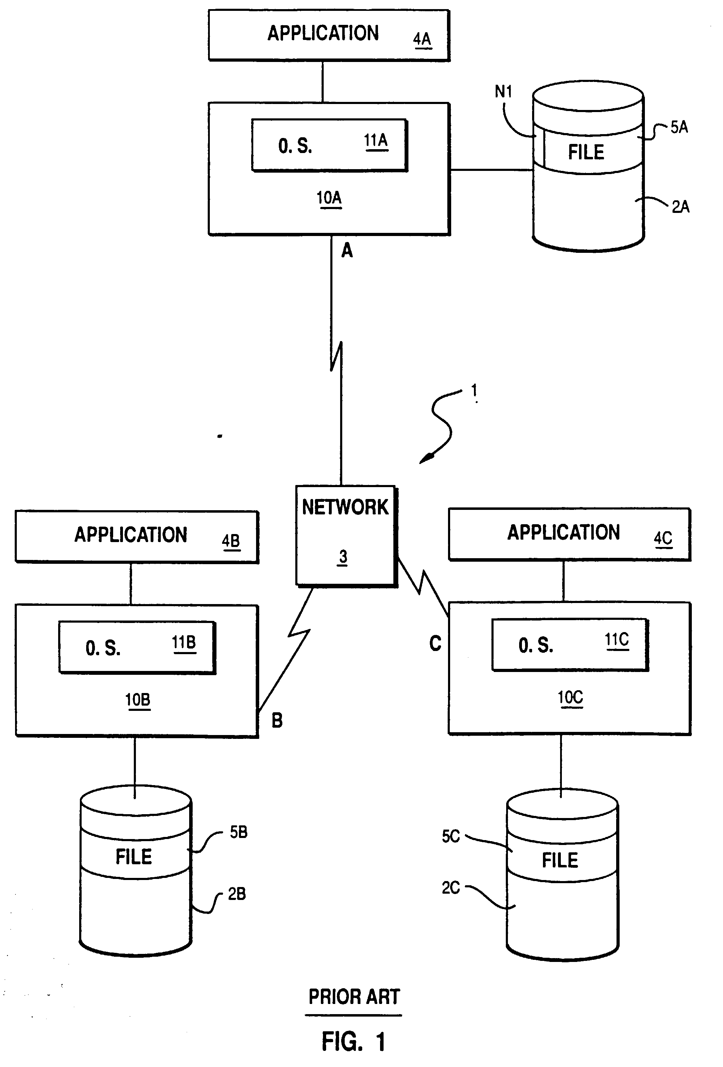

As shown in Fig. 1, a distributed networking environment 1 consists of two or more nodes A, B, C, connected through a communication link or a network 3. The network 3 can be either a local area network (LAN), or a wide area network (WAN).

At any of the nodes A, B, C, there may be a processing system 10A, 10B, 10C, such as a workstation. Each of these processing systems 10A, 10B, 10C, may be a single user system or a multi-user system with the ability to use the network 3 to access files located at a remote node. For example, the processing system 10A at local node A is able to access the files 5B and 5C at the remote nodes B and C, respectively.

Within this document, the term "server" will be used to indicate the processing system where the file is permanently stored, and the term "client" will be used to mean any other processing system having processes accessing the file. It is to be understood, however, that the term "server" does not mean a dedicated server as that term is used in some local area network systems. The distributed services system in which the invention is implemented is truly a distributed system supporting a wide variety of applications running at different nodes in the system which may access files located anywhere in the system.

As mentioned, the invention to be described hereinafter is directed to a distributed data processing system in a communication network. In this environment, each processor at a node in the network potentially may access all the files in the network no matter at which nodes the files may reside.

Other approaches to supporting a distributed data processing system are known. For example, IBM's Distributed Services for the AIX operating system is disclosed in EP-A-0,278,312. In addition, Sun Microsystems has released a Network File System (NFS) and Bell Laboratories has developed a Remote File System (RFS). The Sun Microsystems NFS has been described in a series of publications including S.R. Kleiman, "Vnodes: An Architecture for Multiple File System Types in Sun UNIX", Conference Proceedings, USENIX 1986 Summer Technical Conference and Exhibition, pp. 238 to 247; Russel Sandberg et al., "Design and Implementation of the Sun Network Filesystem", Conference Proceedings, Usenix 1985, pp. 119 to 130; Dan Walsh et al., "Overview of the Sun Network File System", pp. 117 to 124; JoMei Chang, "Status Monitor Provides Network Locking Service for NFS", JoMei Chang, "SunNet", pp. 71 to 75; and Bradley Taylor, "Secure Networking in the Sun Environment", pp. 28 to 36. The AT&T RFS has also been described in a series of publications including Andrew P. Rifkin et al., "RFS Architectural Overview", USENIX Conference Proceedings, Atlanta, Georgia (June 1986), pp. 1 to 12; Richard Hamilton et al., "An Administrator's View of Remote File Sharing", pp. 1 to 9; Tom Houghton et al., "File Systems Switch", pp. 1 to 2; and David J. Olander et al., "A Framework for Networking in System V", pp. 1 to 8.

Some of the problems which are encountered in accessing data at remote nodes can be better understood by first examining how a prior art distributed data processing system uses files. As taught by EP-A-0,278,312, files stored at a server node can be accessed by processes running on remote client nodes. In order to synchronise and coordinate the use of a file by multiple clients, locking facilities are provided that work in such a distributed data processing system. By locking a file a process indicates its intention to make use of the file. In practice there are various kinds of file locks, such as locks indicating a desire for exclusive access, locks indicating a desire for shared access, locks on portions of the file, and locks on the entire file. Because multiple clients may be using a single file, the data structures describing the locks that have been placed are kept at the server when there is the possibility that multiple clients actually will be using the file. In the case where it is clear that a single client is the only user of the file the data structure describing the locks can be kept at that client. In the prior art this determination of where this data structure is located is made based on the processes that have the file open. Before a lock can be placed on the file, a process must have their file open. Therefore, when all of the processes that have the file open are located at a single node, the data structure describing locks on that file is kept at that node.

A difficulty with this prior art approach results from the fact that this determination is based upon which processes have the file open. In situations in which a file is shared by multiple clients, the data structures describing the locks will always be kept at the server despite the fact that only one process at a time actually has an interest in locking the file. A further difficulty is introduced by the need to relocate the data structures describing the locks at the time a process at a different client opens the file. Due to resource limits at the server, it may be impossible to move the data structure back to the server at the time of this open. When this occurs, either locking information must be lost (a very undesirable alternative) or the open operation must be refused (a situation that few applications are prepared to deal with).

As taught by the prior art, requests for locks are sent to the server when the data structures describing the locks reside at the server. These requests are executed by a kernel at the server. A kernel process is a process which has access to the operating system's data including the data structure describing the locks. When a lock request cannot be granted due to conflicting locks already in place, most lock operations are designed to wait until the blocking locks are released and the requested lock can be put in place. The problem with the technique used by the prior art is that a kernel process (kprocs) must wait at the server until the blocking locks are released. Kprocs consume resources at the server and, consequently, are limited in number. By forcing a kernel process to be idle in the presence of blocking locks, the design is more susceptible to exhaustion of all available kprocs. In an application in which processes of several clients are accessing a shared file, if one process locks the file and then, due to user error or a software error, fails to unlock the file a large number of kprocs may be tied up indefinitely. In extreme circumstances all available kprocs might be occupied in this manner to the extent that the system would not be able to support any more remote operations.

It would, therefore, be of great benefit in a distributed data processing system to provide a system and method for locking remote files that does not locate the data structures describing the locks for a file based on the processes having the file open and, further, does not require kprocs to wait when there are blocking locks.

Accordingly the present invention provides a method of locking a file stored at a server of a distributed data processing system incorporating potentially plural client machines needing access to said file, comprising:
maintaining, at a first client machine, a data structure describing a lock on a file; and
notifying said first client machine by the server, responsive to a request received by the server from a second client machine, that the data structure must be transferred to the server;
and characterised in that the step of notifying the first client machine occurs responsive to a request to the server from another client machine for a lock on any portion of said file, whereby the data structure is maintained at said one client machine when that client machine is the only client machine attempting to lock the file, and is maintained at the server machine when more than one client machine is attempting to lock the file.

The present invention also provides a server for storing a file in a distributed data processing system incorporating potentially plural client machines needing access to said file, comprising:
means for receiving a request from a first client machine in relation to said file;
means responsive to said request for determining whether to reply to the first client that it can maintain a data structure describing a lock on the file, or for determining whether such a data structure is located at a second client machine; and
means, responsive to a determination that the data structure is located at a second client machine, for notifying said second client machine that the data structure must be transferred to the server;
and characterised in that said request requests a lock on said file, and wherein said first client can maintain the data structure describing a lock on the file if no other client machine has locked any portion of the file.

In a distributed data processing system arrangement disclosed hereinafter, locks on a file are supported by a data structure that resides on either a client machine or on the file's server. When only a single client's processes are locking a file, the data structure can reside on that client. Whenever a plurality of client machines attempt to place locks on a file, the data structure is moved to the server; this forces the clients locking the file to communicate with the server when performing lock operations.

A lock operation performed at a client uses the file lock data structure when one exists at the client. No communication with the server is needed when the data structure is present in the client doing the locking. When the data structure is not at the client, the client sends its lock request to the server. Upon receiving the request, the file's server determines if the requested lock operation is the only one currently being applied to the file. If it is the only one, the server responds to the lock request message with a reply that indicates that the client can begin maintaining the locking information at its node. Later, if a second client sends a request for a lock on this file to the server, the server will revoke the data structure maintaining the first client's locks. The first client sends the data structure back to the server and subsequently performs locking operations by sending requests to the server (until such time that it is informed again by the server that it can beginning maintaining the lock information).

When a client requests a lock from the server that cannot be granted because of an existing blocking lock, the client is informed that it should put the requesting process asleep awaiting a retry notification. When there is a change in the locks on the file that might allow such a client's now sleeping process to acquire the lock, the server sends a retry notice to the client. This awakens the sleeping process at the client, and the process then reattempts the lock operation by sending a message to the server.

The present invention will be described further by way of example with reference to an embodiment thereof and a prior art arrangement as illustrated in the accompanying drawings, in which:
Fig. 1 is a block diagram of a prior art distributed data processing system;
Fig. 2 is a flow chart which shows the processing that occurs at a client node when a process executing at that client attempts to perform a lock operation on a file;
Fig. 3 is a flow chart which shows the operations performed at the server in response to a lock request; and
Fig. 4 shows the structure of a files lock table.

With reference to the prior art network of Fig. 1, as enhanced by the improvement of this invention, client 10A sends a message to server 10C requesting that a lock be placed on File 5C, which is stored at server 10C. Server 10C replies to client 10A's request by indicating that there are no locks currently on the file and that client 10A should maintain the lock information at client 10A until revoked by the server. Subsequently, client 10B sends a lock request to server 10C for the same file. This causes the server 10C to send a revoke locks message to client 10A. In response, client 10A sends back to server 10C the lock information for the file. The server 10C may then discover that the lock request by client 10B cannot be granted, and that the process on client 10B will have to wait before acquiring the lock. Server 10C indicates this to client 10B in a reply that indicates a retry notification will be sent to client 10B when client 10A removes one of the blocking locks. It may be discovered when client 10B attempts to lock the file again that it is still blocked by a different lock or by the same lock which has been reapplied before client 10B performed its retry.

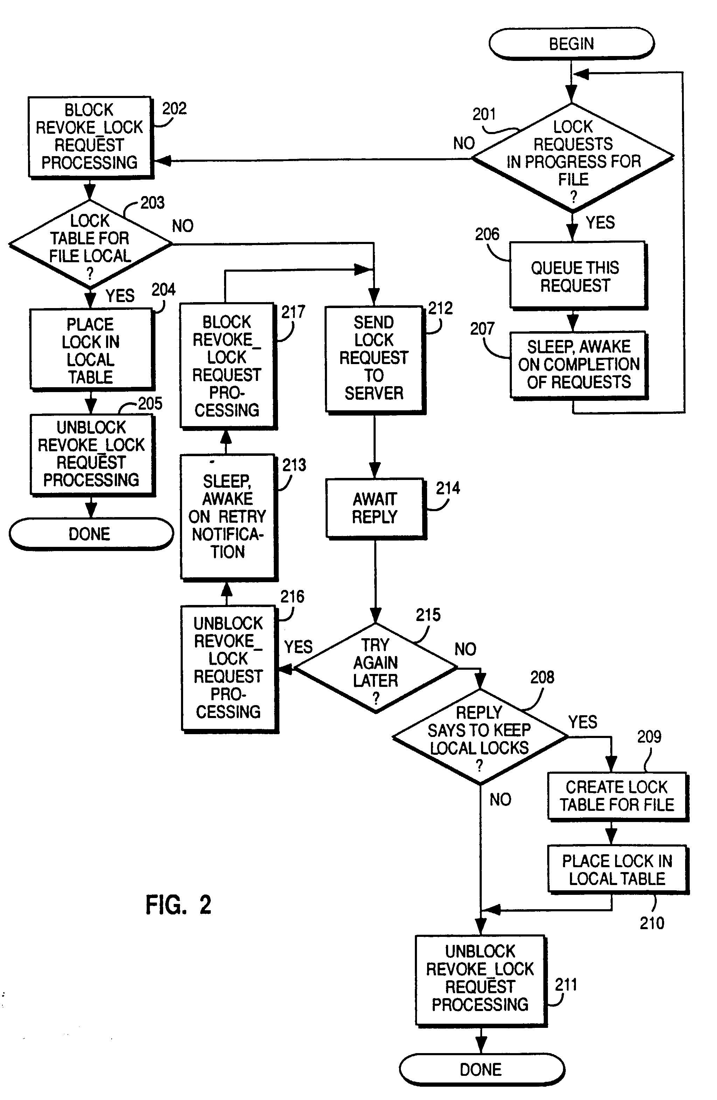

Fig. 2 is a flow chart which shows the processing that occurs at a client node when a process executing at that client attempts to perform a lock operation on a file. Two particular problems are caused by the possibility that messages could be delayed by the communications mechanisms connecting the client to the server. These problems are handled by the processing described in Fig. 2.

This processing first makes sure that no other lock request are in progress for that file. By insuring that no other lock requests are in progress for this file no more than one lock request can be outstanding at a time for a single file. This is important because if a second lock request is sent to a server that had answered a first lock request before the answer to the first request had arrived at the client, a possible problem could occur. In this situation the server could have granted permission to the client to keep the data structures describing the lock on the file at that client in the answer to the first request. After informing the client to keep track of locking information in this manner, a server does not expect to be asked to satisfy a subsequent lock request. This undesirable situation could occur if a second lock request is issued by the client before the client receives the answer to the first. For this reason, lock processing at the client waits until any outstanding lock request for the file has been replied to before initiating a subsequent lock request for that file.

After insuring that there are no outstanding lock requests in progress lock processing then blocks the processing of any revoke lock requests for the file that may be received from the file's server. This is important in order to insure that the reply for the lock request which will be sent to the server is received before any revoke lock request is processed at the client that could refer to a lock granted in the reply. If revoke lock requests were not blocked, the client could send a request to lock the file, the server could grant the request and send a reply to the client, and the server could then issue a revoke lock that referred to the lock just granted. If the revoke lock request in this case arrived at the client before the lock request reply, the client might not be able to correctly process the revoke, and furthermore, when the reply to the lock did arrive, the client might incorrectly assume that it had a lock on the file.

Referring again to Fig. 2, at 201 a test is performed to determine if there are any outstanding lock requests in process for the file. If there are, at 206 the request currently being processed is placed on a queue and at 207 is put in a sleep state to be awakened upon completion of outstanding requests. When this occurs, processing loops back to step 201. If there are no lock requests in progress for the file, processing continues at 202, wherein any any revoke lock request processing is blocked. This means that the current request will wait until any revoke lock requests that are currently being processed complete and, furthermore, prevents any revoke lock requests that have not yet begun from starting until later unblocked. At 203 it is determined if the data structures describing the lock information for this file (hereinafter referred to as the "lock table" for this file) are being held locally. At 204 processing continues if the lock table is local and the lock operation is performed on the local table. At 205 revoke lock request processing is unblocked.

When the lock table for the file is not local, processing continues at 212 where a lock request for this file is sent to the server. At 214 processing awaits the reply to the lock request. When the reply arrives processing continues at 215 wherein the reply is inspected. If the reply indicates that the process should try again later, processing continues at 216, wherein revoke lock request processing is unblocked. At 213 the process is put into a sleep state to be awakened upon the receipt of a retry message. Upon awakening, at 217 the revoke lock request processing is blocked and processing continues by looping back to 212.

If a reply to a lock request does not indicate that it is necessary to try again later the reply is inspected at 208. If the reply indicates that locks are to be kept locally at this client, processing continues at 209. At 209 a local lock table is created for this file. At 210 the original lock request is placed in the lock table. Placing a lock in the lock table at 204 may involve waiting until a blocking lock for this file is released by another process. However, placing a lock in the lock table at 210 will not involve waiting for a blocking lock since the table is a newly created, empty table. At 211 revoke lock request processing is unblocked, allowing revoke block processing to proceed now that the lock request is complete.

The following programming design language listing is another form of the description of the above processing that occurs at a client node when a process executing at that client attempts to perform a lock operation on a file. This listing parallels the operation described above for Fig. 2.

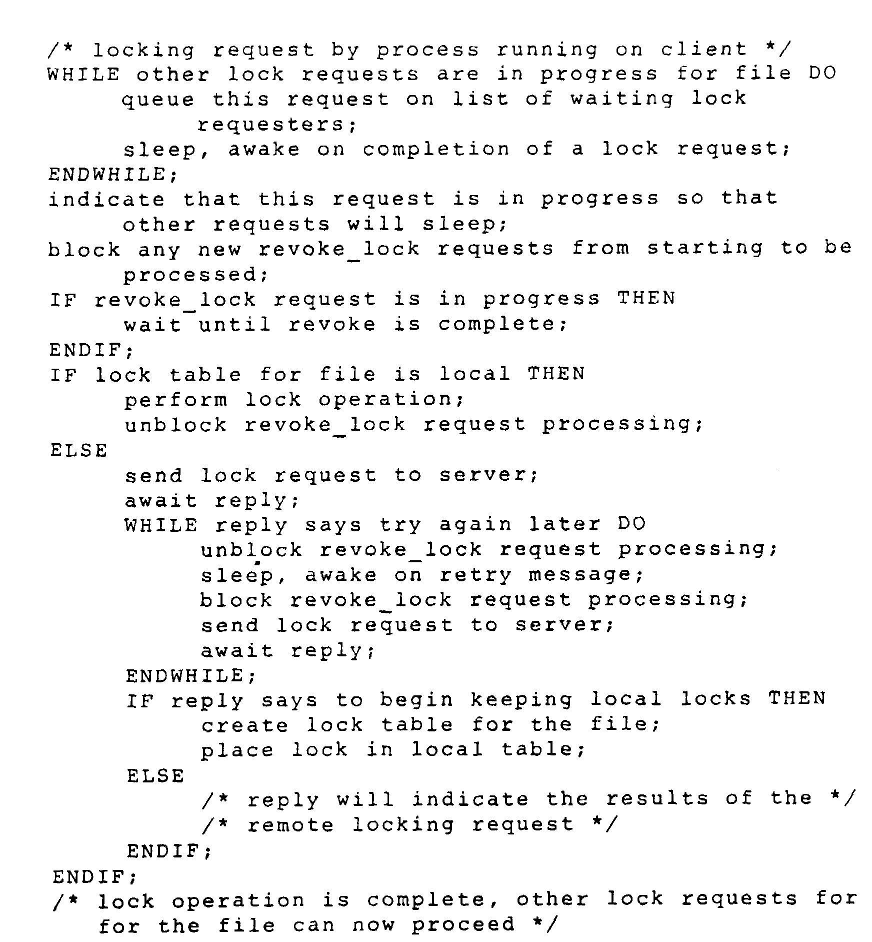

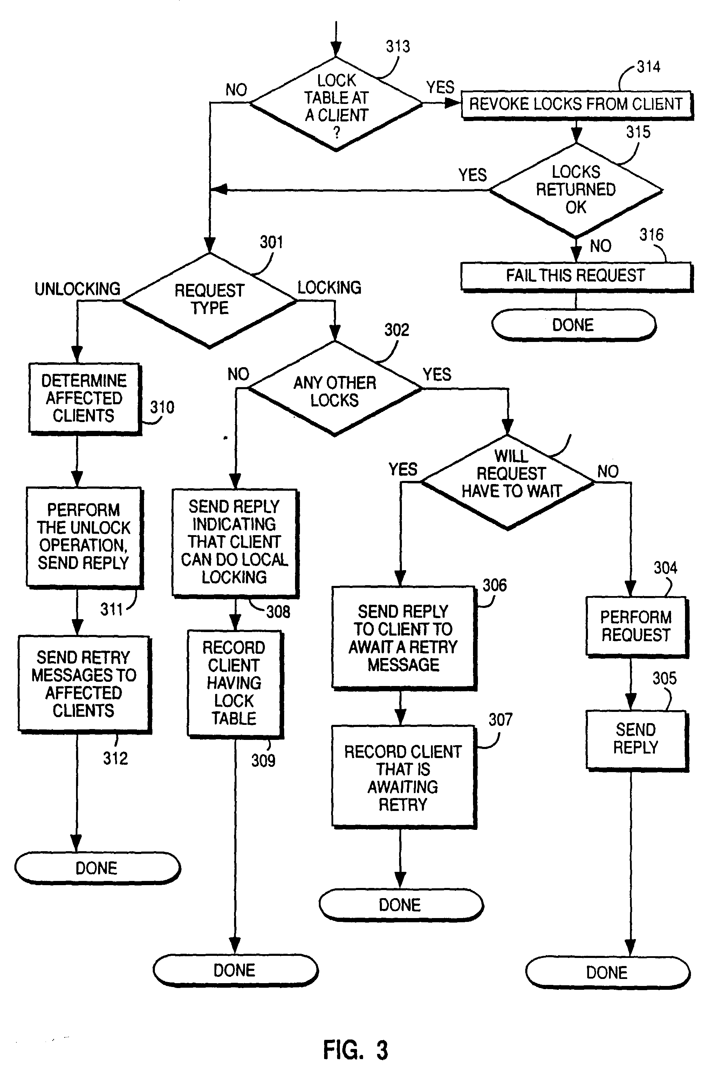

Fig. 3 is a flow chart which shows the operations performed at the server in response to a lock request. Requests to unlock a file may trigger the transmission of retry notices to clients. Requests from a client to lock a file may cause the client to be informed that it can maintain the lock table locally or that it should sleep until it receives a retry message or that the lock operation has been performed. These cases are illustrated in the accompanying Fig. 3.

Assume for the purpose of illustration that client 10A is currently maintaining a lock table on a file stored at server 10C. If client 10B requests a lock on this file server 10C will send a revoke locks message to client 10A and will inform client 10A of the amount of space that server 10C has available in which to receive the lock table. If client 10A determines that its lock table is too large to be accommodated by this space, it returns an indication of this to server 10C. In this case server 10C sends a reply to client 10B that its lock request cannot be granted and has failed.

In Fig. 3, step 313 determines if the lock table is stored at a client. If it is, at 314 the server issues a revoke locks message to that client. At 315 if this lock table information is successfully returned, processing continues at 301. If the lock table is not successfully returned (because, for example, the size of the lock table exceeded the space available at the server for storing the lock table), at 316 the lock request is refused and the client is so informed.

Step 301 examines the type of request being performed. If the request is a request to unlock, processing continues at 310 wherein any clients that have previously been sent a reply to a lock request causing them to sleep awaiting a retry message and that have the possibility of having their original lock request granted after the unlock has been performed any clients are determined. At 311 the unlock operation is performed and a reply is sent to the requester indicating the outcome. At 312 retry messages are sent to all affected clients.

If the type of request is a request to lock, processing continues to step 302 wherein it is determined if there are any other locks currently on the file. If there are not, processing continues to 308 wherein a reply to the original lock request is sent indicating that the client can create a local lock table. At 309 a record is made of the client that will be maintaining the local lock table.

If it is determined that there are other locks on the file, processing continues to 303 wherein it is further determined if the request will entail waiting. If the request does interfere with previously established locks in a way that forces the request to wait, processing continues at 306 wherein a reply is sent, indicating that the requesting process at the client should be put in a sleep state awaiting a retry message. A record is made in the lock table, associated with the lock causing interference, of the client that is awaiting a retry message.

If the request can be performed without the need to wait, processing continues at 304 wherein the request is performed. At 305 a reply is sent to the client indicating the outcome of the request.

The following programming design language listing is another form of the description of the above operations performed at the server in response to a lock request. This listing parallels the operation described above for Fig. 3.

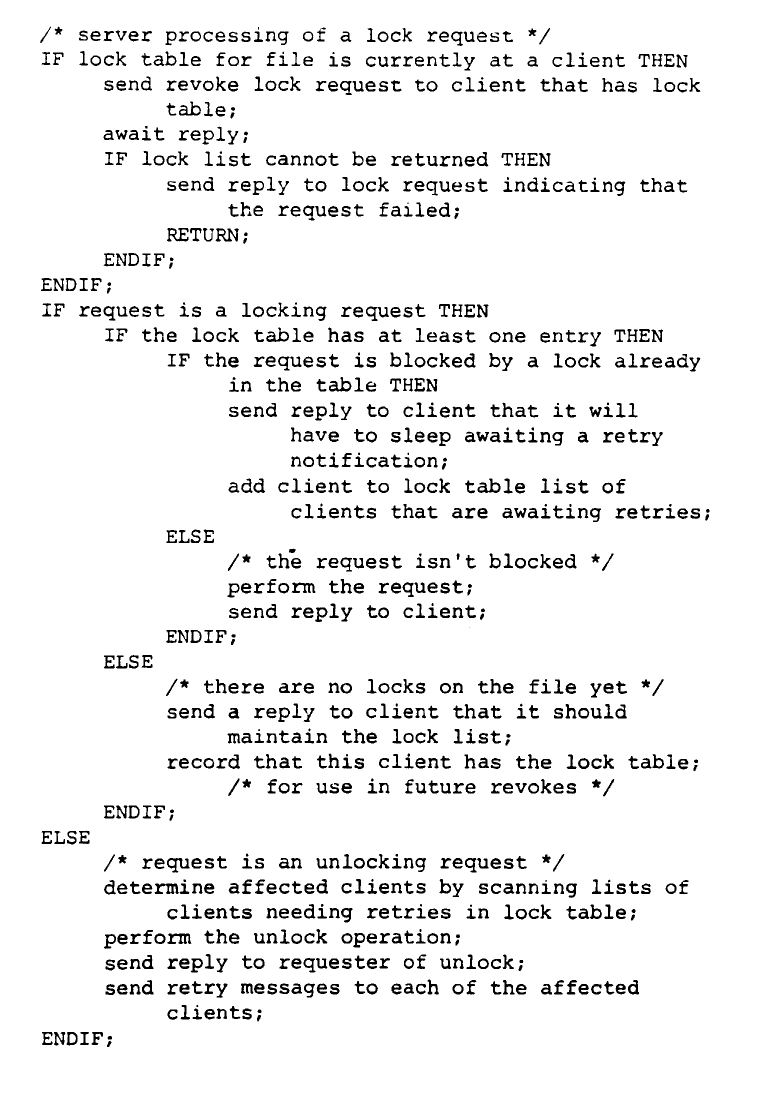

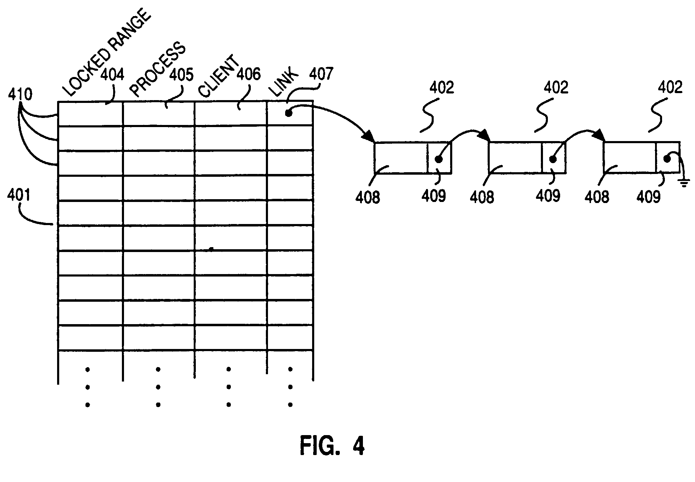

Fig. 4 shows the structure of a files lock table 401. The table comprises individual entries 410. Each entry 401 has four fields 404-407. Entry 404 describes the range and type of lock. The range represents a range of bytes in the file that have been locked for shared use or exclusive use depending on the type of lock indicated in this field. Entry 405 identifies the process that has the file lock, and entry 406 identifies the client node on which this process is running. Entry 407 is a link field containing a pointer to a list of elements 402. Each element contains a field 409 with a link to the next or a value indicating the end of the list. Field 408 of each element identifies a client that has been sent a reply to a lock request indicating that the requesting process should sleep until sent a retry message. When a lock is unlocked, the list of elements is traversed and retry notices are sent to each of the clients.

In summary, a distributed data processing system and method are disclosed in which locks on a file are supported by a data structure that resides on either a client machine or on the file's server. When only a single client's processes are locking a file, the data structure can reside on that client. Whenever a plurality of client machines attempt to place locks on a file, the data structure is moved to the server; this forces the clients locking the file to communicate with the server when performing lock operations. When a client requests a lock from the server that cannot be granted because of an existing blocking lock, the client is informed that it should put the requesting process asleep awaiting a retry notification. When there is a change in the locks on the file that might allow such a client's now sleeping process to acquire the lock, the server sends a retry notice to the client. This awakens the sleeping process at the client, and the process then reattempts the lock operation by sending a message to the server.

## Claims

1. A method of locking a file (5C) stored at a server (C) of a distributed data processing system incorporating potentially plural client machines needing access to said file, comprising:
maintaining, at a first client machine (A), a data structure (401) describing a lock on a file; and
notifying (314) said first client machine by the server, responsive to a request received by the server from a second client machine (B), that the data structure must be transferred to the server;
and characterised in that the step of notifying the first client machine occurs responsive to a request to the server from another client machine for a lock on any portion of said file, whereby the data structure is maintained at said one client machine when that client machine is the only client machine attempting to lock the file, and is maintained at the server machine when more than one client machine is attempting to lock the file.

2. A method as claimed in claim 1, further including, before the maintaining step:
receiving, at the server, a request by any client machine to lock that portion of the file;
detecting, at the server, whether any other client machine has locked any portion of the file;
replying to the currently requesting client machine that it can maintain its lock on that first portion of the file locally if and while no other client machine attempts to lock any portion of that file; and in response to such reply, causing the establishing, at that client machine, of the data structure describing the lock.

3. A method as claimed in Claim 2 further comprising determining an amount of space required at whichever client machine for storage of that data structure describing the lock.

4. A method as claimed in Claim 3 further comprising determining if the amount of space required at the appropriate client machine for storage of a given data structure is available at the server following notification that another client machine is attempting to lock any portion of that file.

5. A method as claimed in Claim 4 further comprising transferring the data structure describing that lock from whichever client machine to the server if the amount of space required at that client machine for storage of the data structure describing the lock is available at the server.

6. A method as claimed in Claim 5 further comprising notifying the subsequently requesting client machine that its attempt to lock the indicated portion of the file is presently impossible if the amount of space required at that client machine for storage of the data structure is unavailable at the server.

7. A method as claimed in any preceding claim including, in response to an attempt by one client machine to lock a portion of said file;
detecting, at the server, whether any other client machine has already locked data in that portion of the file; and
notifying, by the server, said one client machine to put to sleep a process therein requesting such attempted lock on the file when that portion of the file is already locked by another client machine.

8. A method as claimed in Claim 7 further comprising notifying, by the server, such first client machine to awaken that process when the lock state on that file changes.

9. A server (C) for storing a file (5C) in a distributed data processing system incorporating potentially plural client machines needing access to said file, comprising:
means for receiving a request from a first client machine (A) in relation to said file;
means responsive to said request for determining whether to reply to the first client that it can maintain a data structure (401) describing a lock on the file, or for determining whether such a data structure is located at a second client machine; and
means, responsive to a determination that the data structure is lccated at a second client machine, for notifying said second client machine that the data structure must be transferred to the server;
and characterised in that said request requests a lock on said file, and wherein said first client can maintain the data structure describing a lock on the file if no other client machine has locked any portion of the file.

10. A server as claimed in claim 9, wherein a client machine includes means for establishing a data structure describing the lock in response to the reply enabling it to maintain the lock locally.

11. A server as claimed in claim 10 wherein a client machine further includes means responsive to the notifying means for determining what amount of space is required at the appropriate client machine for storage of the data structure describing a particular requested lock structure.

12. A server as claimed in claim 11 further comprising means responsive to the amount of space determining means for further determining if the amount of space required at the client machine is available at the server following a notification that another client machine is attempting to lock any portion of that file.

13. A server as claimed in Claim 12, wherein the client machine further includes means responsive to the further determining means for transferring the data structure describing that lock from the client machine to the server if the amount of space required at the client machine is available at the server.

14. A server as claimed in Claim 15 further comprising means responsive to the further determining means for notifying any subsequently requesting client machine that its attempt to lock any portion of that file is presently impossible if the amount of space required at the client machine for storing of the lock structure locally is unavailable at said server.

15. A server as claimed in any of Claims 9 to 14, wherein the client machine further includes:
means for attempting to lock a portion of the file;
and the server further comprises:
means responsive to the attempting means for detecting whether any other client machine has locked data in that portion of the file; and
means connected to the detecting means for notifying the client machine to put to sleep a process therein requesting the attempted lock when that portion of the file is already locked by some other client machine.

16. A server as claimed in Claim 17 further comprising means, connected to the detecting means for notifying the client machine to awaken that process when the state of locks on that file changes.

## Patentansprüche

1. Ein Verfahren, um eine Datei (5C) zu verriegeln, die in einer Diensteinheit (C) in einem verteilten Datensystem gespeichert ist, das potentiell eine Vielzahl von Benutzerrechnern enthält, die Zugriff auf diese Datei benötigen, wobei das Verfahren
in einem ersten Benutzerrechner (A) eine Datenstruktur (401) unterhält, die eine Dateiverriegelung beschreibt; und
diesen ersten Benutzerrechner über die Diensteinheit benachrichtigt (314), die auf eine Anforderung reagiert, welche die Diensteinheit von einem zweiten Benutzerrechner (B) erhalten hat und die besagt, daß die Datenstruktur an die Diensteinheit übertragen werden muß;
und die dadurch gekennzeichnet wird, daß der Schritt zur Benachrichtigung des ersten Benutzerrechners als Reaktion auf eine Anforderung von einem anderen Benutzerrechner an die Diensteinheit erfolgt, einen Teil dieser Datei zu verriegeln, wobei die Datenstruktur in einem Benutzerrechner behalten wird, wenn dieser Benutzerrechner der einzige Benutzerrechner ist, der versucht, die Datei zu verriegeln und die in der Diensteinheit behalten wird, wenn mehr als ein Benutzerrechner versucht, die Datei zu verriegeln.

2. Ein Verfahren wie in Anspruch 1 angemeldet, das außerdem vor dem Schritt zum Behalten der Datenstruktur
eine Anforderung von einem anderen Benutzerrechner in der Diensteinheit enthält, diesen Teil der Datei zu verriegeln;
in der Diensteinheit erkennt, ob ein anderer Benutzerrechner einen Teil der Datei verriegelt hat;
dem aktuell anfordernden Kundenrechner antwortet, daß dieser ihre Verriegelungen lokal in diesem ersten Teil der Datei behalten kann, wenn und während kein anderer Benutzerrechner versucht, einen Teil dieser Datei zu verriegeln; und als Reaktion auf diese Antwort in dem Benutzerrechner, die Erstellung der Datenstruktur, welche die Verriegelung beschreibt, veranlaßt.

3. Ein Verfahren wie in Anspruch 2 angemeldet, das außerdem den Platzbedarf festlegt, der in dem Benutzerrechner zur Speicherung der Datenstruktur erforderlich ist, welche die Verriegelung beschreibt.

4. Ein Verfahren wie in Anspruch 3 angemeldet, das außerdem festlegt, ob der Platzbedarf, der in dem entsprechenden Benutzerrechner zur Speicherung einer gegebenen Datenstruktur erforderlich ist, in der Diensteinheit verfügbar ist, nachdem ein anderer Benutzerrechner versucht hat, einen Teil dieser Datei zu verriegeln.

5. Ein Verfahren wie in Anspruch 4 angemeldet, das außerdem die Übertragung der Datenstruktur enthält, welche die Verriegelung aus dem Benutzerrechner in die Diensteinheit beschreibt, wenn der Platzbedarf, der in dem Benutzerrechner zur Speicherung der Datenstruktur erforderlich ist, welche die Verriegelung beschreibt, in der Diensteinheit verfügbar ist.

6. Ein Verfahren wie in Anspruch 5 angemeldet, das außerdem den in der Folge antwortenden Benutzerrechner benachrichtigt, daß sein Versuch, den angegebenen Teil der Datei zu verriegeln, derzeit unmöglich ist, wenn der in dem Benutzerrechner zur Speicherung der Datenstruktur erforderliche Platz in der Diensteinheit nicht zur Verfügung steht.

7. Ein Verfahren wie in irgendeinem vorhergehenden Anspruch angemeldet, das als Reaktion auf einen Versuch von einem der Benutzerrechner zur Verriegelung eines Teils der Datei
in der Diensteinheit erkennt, ob ein anderer Benutzerrechner bereits verriegelte Daten in diesem Teil der Datei enthält; und
über die Diensteinheit diesen Benutzerrechner benachrichtigt, einen darin enthaltenen Prozeß zu deaktivieren, der diese versuchte Verriegelung in der Datei verlangt, wenn dieser Teil der Datei bereits von einem anderen Benutzerrechner verriegelt wurde.

8. Ein Verfahren wie in Anspruch 7 angemeldet, das außerdem über die Diensteinheit den ersten Benutzerrechner benachrichtigt, diesen Prozeß zu aktivieren, wenn sich der Verriegelungsstatus in dieser Datei verändert.

9. Eine Diensteinheit (C), um eine Datei (5C) in einem verteilten Dateisystem zu speichern, das potentiell mehrere Benutzerrechner enthält, die Zugriff auf diese Datei verlangen, mit
Mitteln, um eine Anforderung von einem ersten Benutzerrechner (A) in bezug auf diese Datei zu empfangen;
Mitteln, die auf diese Anforderung reagieren, um festzulegen, ob dem ersten Benutzerrechner geantwortet wird, daß er eine Datenstruktur (401) behalten kann, die eine Verriegelung in der Datei beschreibt oder um festzulegen, ob sich eine solche Datenstruktur in einem zweiten Benutzerrechner befindet; und
Mitteln, die auf eine Festlegung reagieren, daß sich die Datenstruktur in einem zweiten Benutzerrechner befindet, um diesen zweiten Benutzerrechner zu benachrichtigen, daß die Datenstruktur an die Diensteinheit übertragen werden muß;
und die dadurch gekennzeichnet wird, daß die Anforderung eine Verriegelung in dieser Datei verlangt und wobei dieser erste Benutzerrechner die Datenstruktur behalten kann, welche eine Verriegelung in der Datei beschreibt, wenn kein anderer Benutzerrechner einen Teil der Datei verriegelt hat.

10. Eine Diensteinheit wie in Anspruch 9 angemeldet, wobei ein Benutzerrechner Mittel enthält, um eine Datenstruktur zu erstellen, welche die Verriegelung als Reaktion auf die Antwort beschreibt, welche dieser ermöglicht, die Verriegelung lokal zu behalten.

11. Eine Diensteinheit wie in Anspruch 10 angemeldet, wobei ein Benutzerrechner außerdem Mittel enthält, die auf die Benachrichtigungsmittel zur Festlegung reagieren, welcher Platzbedarf in dem entsprechenden Benutzerrechner zur Speicherung der Datenstruktur benötigt wird, die eine besondere, angeforderte Verriegelungsstruktur beschreibt.

12. Eine Diensteinheit wie in Anspruch 11 angemeldet, die außerdem Mittel enthält, welche auf die Mittel zur Festlegung des Platzbedarfs reagieren, um außerdem festzulegen, ob der in dem Benutzerrechner erforderliche Platzbedarf in der Diensteinheit nach einer Benachrichtigung, daß ein anderer Benutzerrechner versucht, einen Teil dieser Datei zu verriegeln, vorhanden ist.

13. Eine Diensteinheit wie in Anspruch 12 angemeldet, wobei der Benutzerrechner außerdem enthält: Mittel, um auf die zusätzlichen Festlegungsmittel zur Übertragung der Datenstruktur zu reagieren, welche die Verriegelung von dem Benutzerrechner in die Diensteinheit beschreibt, wenn der in dem Benutzerrechner verlangte Platzbedarf in der Diensteinheit verfügbar ist.

14. Eine Diensteinheit wie in Anspruch 15 festgelegt, die außerdem Mittel enthält, welche auf die zusätzlichen Festlegungsmittel reagieren, einen in der Folge anfordernden Benutzerrechner zu benachrichtigen, daß sein Versuch, einen Teil dieser Datei zu verriegeln, derzeit unmöglich ist, wenn der in dem Benutzerrechner zur Speicherung der Verriegelungsstruktur erforderliche Platzbedarf in dieser Diensteinheit lokal nicht verfügbar ist.

15. Eine Diensteinheit wie in einem der Ansprüche 9 bis 14 festgelegt, wobei der Benutzerrechner außerdem enthält:
Mittel, um zu versuchen, einen Teil der Datei zu verriegeln;
und wobei die Diensteinheit außerdem enthält:
Mittel, die auf die Mittel reagieren, die zu erkennen versuchen, ob ein anderer Benutzerrechner Daten in diesem Teil der Datei verriegelt hat; und
Mittel, die mit den Erkennungsmitteln verbunden sind, den Benutzerrechner zu benachrichtigen, einen darin Prozeß zu deaktivieren, welcher die versuchte Verriegelung anfordert, wenn dieser Teil der Datei bereits in einem anderen Benutzerrechner verriegelt ist.

16. Eine Diensteinheit wie in Anspruch 17 festgelegt, die außerdem Mittel enthält, welche mit den Erkennungsmitteln verbunden sind, um den Benutzerrechner zu benachrichtigen, diesen Prozeß zu aktivieren, wenn sich der Status der Verriegelungen in dieser Datei ändert.

## Revendications

1. Procédé de verrouillage d'un fichier (5C) emmagasiné à un serveur (C) d'un système de traitement de données réparties incorporant potentiellement une pluralité de machines client ayant besoin d'avoir accès audit fichier, comprenant:
maintenir, à une première machine client (A), une structure de données (401) décrivant un verrouillage sur un fichier; et
avertir (314) ladite première machine client, par le serveur, en réponse à une requête reçue par le serveur en provenance d'une deuxième machine client (B), que la structure de données doit être transférée au serveur;
et caractérisé en ce que l'étape d'avertir la première machine client a lieu en réponse à une requête adressée au serveur en provenance d'une autre machine client pour un verrouillage sur une portion quelconque dudit fichier, ce qui fait que la structure de données est maintenue à ladite une machine client lorsque cette machine client est la seule machine client qui essaie de verrouiller le fichier, et est maintenue à la machine serveur lorsque plus d'une machine client essaie de verrouiller le fichier.

2. Procédé selon la revendication 1, comprenant en outre, avant l'étape de maintenir:
recevoir, au serveur, une requête par une machine client quelconque de verrouiller cette portion du fichier;
détecter, au serveur, si toute autre machine client a verrouillé une portion quelconque du fichier;
répondre à la machine client actuellement interrogatrice qu'elle peut maintenir localement son verrouillage sur cette première portion du fichier si, et pendant que, aucune autre machine client n'essaie de verrouiller une portion quelconque de ce fichier et, comme suite à cette réponse, permettre l'établissement, à cette machine client, de la structure de données décrivant le verrouillage.

3. Procédé selon la revendication 2, comprenant en outre de déterminer une quantité d'espace requise à n'importe quelle machine client pour un emmagasinage de cette structure de données décrivant le verrouillage.

4. Procédé selon la revendication 3, comprenant en outre de déterminer si la quantité d'espace requise à la machine client appropriée pour un emmagasinage d'une structure de données donnée est disponible au serveur après notification qu'une autre machine client essaie de verrouiller une portion quelconque de ce fichier.

5. Procédé selon la revendication 4, comprenant en outre de transférer la structure de données décrivant ce verrouillage à partir de n'importe quelle machine client sur le serveur, si la quantité d'espace requise à cette machine client pour un emmagasinage de la structure de données décrivant le verrouillage, est disponible au serveur.

6. Procédé selon la revendication 5, comprenant en outre d'avertir la machine client ultérieurement interrogatrice que sa tentative de verrouiller la portion indiquée du fichier est actuellement impossible si la quantité d'espace requise à cette machine client pour un emmagasinage de la structure de données, n'est pas disponible au serveur.

7. Procédé selon l'une quelconque des revendications précédentes comprenant, en réponse à une tentative par une machine client de verrouiller une portion dudit fichier:
détecter, au serveur, si une autre machine client quelconque a déjà verrouillé des données dans cette portion du fichier; et
avertir, par le serveur, ladite une machine client d'y mettre en sommeil un processus demandant ce verrouillage essayé sur le fichier lorsque cette portion du fichier est déjà verrouillée par une autre machine client.

8. Procédé selon la revendication 7, comprenant en outre d'avertir, par le serveur, cette première machine client de réveiller ce processus lorsque l'état de verrouillage sur ce fichier change.

9. Serveur (C) pour emmagasiner un fichier (5C) dans un système de traitement de données réparties incorporant potentiellement une pluralité de machines client ayant besoin d'avoir accès audit fichier, comprenant:
des moyens pour recevoir une requête provenant d'une première machine client (A) par rapport audit fichier;
des moyens sensibles à ladite requête pour déterminer s'il faut répondre au premier client qu'il peut maintenir une structure de données (401) décrivant un verrouillage sur le fichier ou pour déterminer si cette structure de données se trouve à une deuxième machine client; et
des moyens, sensibles à une détermination que la structure de données se trouve à une deuxième machine client, pour avertir ladite deuxième machine client que la structure de données doit être transférée au serveur;
et caractérisé en ce que ladite requête demande un verrouillage sur ledit fichier, et dans lequel ledit premier client peut maintenir la structure de données décrivant un verrouillage sur le fichier si aucune autre machine client n'a verrouillé une portion quelconque du fichier.

10. Serveur selon la revendication 9, dans lequel une machine client comprend des moyens pour établir une structure de données décrivant le verrouillage comme suite à la réponse lui permettant de maintenir le verrouillage localement.

11. Serveur selon la revendication 10, dans lequel une machine client comprend en outre des moyens sensibles aux moyens de notification pour déterminer quelle quantité d'espace est requise à la machine client appropriée pour un emmagasinage de la structure de données décrivant une structure de verrouillage requise particulière.

12. Serveur selon la revendication 11, comprenant en outre des moyens sensibles aux moyens de détermination de la quantité d'espace pour une détermination plus avant de si la quantité d'espace requise à la machine client est disponible au serveur après notification qu'une autre machine client essaie de verrouiller une portion quelconque de ce fichier.

13. Serveur selon la revendication 12, dans lequel la machine client comprend en outre des moyens sensibles aux moyens de détermination plus avant pour transférer la structure de données décrivant ce verrouillage depuis la machine client jusqu'au serveur si la quantité d'espace requise à la machine client est disponible au serveur.

14. Serveur selon la revendication 13, comprenant en outre des moyens sensibles aux moyens de détermination plus avant pour avertir toute machine client ultérieurement interrogatrice que sa tentative de verrouiller une portion quelconque de ce fichier est actuellement impossible si la quantité d'espace requise à la machine client pour l'emmagasinage local de la structure de verrouillage n'est pas disponible audit serveur.

15. Serveur selon l'une quelconque des revendications 9 à 14, dans lequel la machine client comprend en outre:
des moyens pour essayer de verrouiller une portion du fichier; et
le serveur comprend en outre:
des moyens sensibles aux moyens pour essayer pour détecter si toute autre machine client a des données verrouillées dans cette portion du fichier; et
des moyens connectés aux moyens de détection pour avertir la machine client d'y mettre en sommeil un processus demandant le verrouillage essayé lorsque cette portion du fichier est déjà verrouillée par quelque autre machine client.

16. Serveur selon la revendication 15, comprenant en outre des moyens connectés aux moyens de détection pour avertir la machine client de réveiller ce processus lorsque l'état des verrouillages sur ce fichier change.
